# EUROPEAN PATENT APPLICATION

(11) **EP 1 770 928 A1**
(43) Date of publication of application: **04.04.2007**
(21) Application number: 06121378.1
(22) Date of filing: 27.09.2006
(51) Int. Cl.: H04L 12/56, H04L 12/28, H04L 12/46

(54) **Method and apparatus for providing virtual private access links in a communication network**

(30) Priority: 30.09.2005 US 240947
(71) Applicant: AT&T Corp., New York, NY 10013-2412 (US)
(72) Inventor: Croak, Marian, Fair Haven, NJ 07704 (US); Eslambolchi, Hossein, Los Altos Hills, CA 94022 (US)
(74) Representative: Harding, Richard Patrick

(57) **Abstract**

A method and apparatus for providing an overlay structure in the access portion of a packet network, e.g., a VolP network, that allows enterprise customers to place their traffic on virtual private links for both signaling and media traffic are disclosed. The method partitions the VoIP access network components so that only subscribers of private access lines can use the virtual private traffic links across the infrastructure. These private links provide the highest quality of service backed by SLA and prioritize the traffic of subscribers of private access lines over any other traffic that is being transmitted.

## Description

The present invention relates generally to communication networks and, more particularly, to a method and apparatus for enabling virtual private access links in communication networks, e.g., packet networks such as Voice over Internet Protocol (VoIP) networks.

### BACKGROUND OF THE INVENTION

Enterprise VoIP customers often want to reap the economic benefits of using shared access facilities but desire the higher quality of service benefits rendered from dedicated communication paths. In shared access facilities, all customers compete for the same available pool of bandwidth and there is typically no quality of service assurance in the form of a Service Level Agreement (SLA). An SLA is a set of performance objectives reached by consensus between the user and the provider of network services that specifies a variety of network service performance guarantees. When traffic volume is high, quality of service experienced by customers of shared access facilities will also degrade. On the other hand, the use of dedicated access facilities results in high, sometimes prohibitive, costs. Enterprise customers often want to obtain some degree of service level guarantee but do not want to pay for the high costs of dedicated access facilities.

Therefore, a need exists for a method and apparatus for enabling virtual private access links in a packet network.

### SUMMARY OF THE INVENTION

In one embodiment, the present invention enables an overlay structure in the access portion of a packet network, e.g., a VoIP network, that allows enterprise customers to place their traffic on virtual private links for both signaling and media traffic. In one embodiment, the present invention partitions the VoIP access network components so that only subscribers of private access lines can use the virtual private traffic links across the infrastructure. These private links provide the highest quality of service backed by SLA and prioritize the traffic of subscribers of private access lines over any other traffic that is being transmitted.

### BRIEF DESCRIPTION OF THE DRAWINGS

The teaching of the present invention can be readily understood by considering the following detailed description in conjunction with the accompanying drawings, in which:

FIG. 1 illustrates an exemplary Voice over Internet Protocol (VoIP) network related to the present invention;

FIG. 2 illustrates an example of enabling virtual private access links in a packet network related to the present invention;

FIG. 3 illustrates a flowchart of a method for enabling virtual private access links in a packet network of the present invention; and

FIG. 4 illustrates a high level block diagram of a general purpose computer suitable for use in performing the functions described herein.

To facilitate understanding, identical reference numerals have been used, where possible, to designate identical elements that are common to the figures.

### DETAILED DESCRIPTION

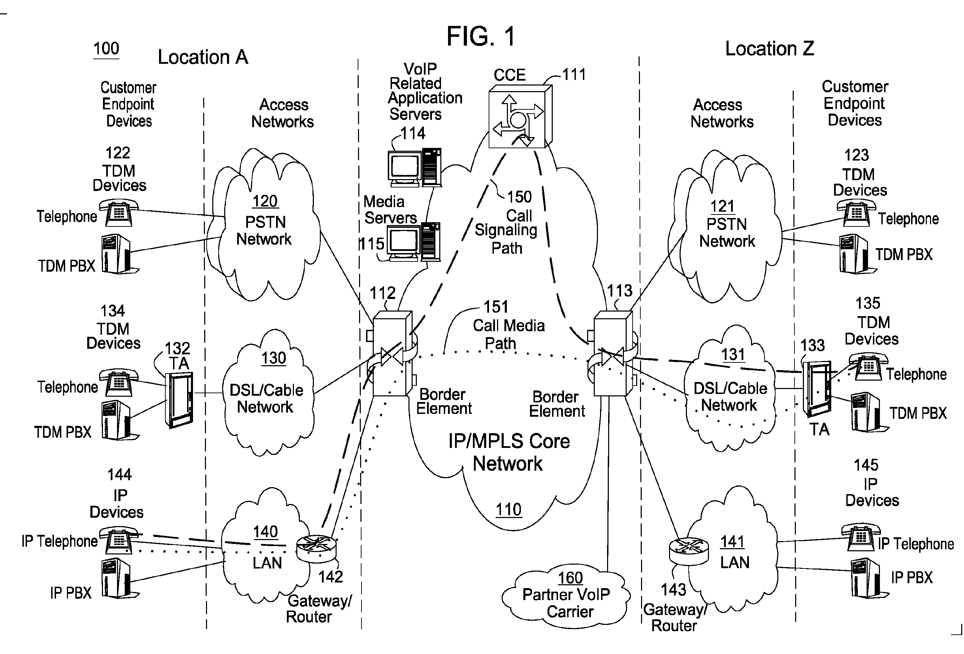

To better understand the present invention, FIG. 1 illustrates a communication architecture 100 having an example network, e.g., a packet network such as a VoIP network related to the present invention. Exemplary packet networks include internet protocol (IP) networks, asynchronous transfer mode (ATM) networks, frame-relay networks, and the like. An IP network is broadly defined as a network that uses Internet Protocol to exchange data packets. Thus, a VoIP network or a SoIP (Service over Internet Protocol) network is considered an IP network.

In one embodiment, the VoIP network may comprise various types of customer endpoint devices connected via various types of access networks to a carrier (a service provider) VoIP core infrastructure over an Internet Protocol/Multi-Protocol Label Switching (IP/MPLS) based core backbone network. Broadly defined, a VoIP network is a network that is capable of carrying voice signals as packetized data over an IP network. The present invention is described below in the context of an illustrative VoIP network. Thus, the present invention should not be interpreted to be limited by this particular illustrative architecture.

The customer endpoint devices can be either Time Division Multiplexing (TDM) based or IP based. TDM based customer endpoint devices 122, 123, 134, and 135 typically comprise of TDM phones or Private Branch Exchange (PBX). IP based customer endpoint devices 144 and 145 typically comprise IP phones or IP PBX. The Terminal Adaptors (TA) 132 and 133 are used to provide necessary interworking functions between TDM customer endpoint devices, such as analog phones, and packet based access network technologies, such as Digital Subscriber Loop (DSL) or Cable broadband access networks. TDM based customer endpoint devices access VoIP services by using either a Public Switched Telephone Network (PSTN) 120, 121 or a broadband access network via a TA 132 or 133. IP based customer endpoint devices access VoIP services by using a Local Area Network (LAN) 140 and 141 with a VoIP gateway or router 142 and 143, respectively.

The access networks can be either TDM or packet based. A TDM PSTN 120 or 121 is used to support TDM customer endpoint devices connected via traditional phone lines. A packet based access network, such as Frame Relay, ATM, Ethernet or IP, is used to support IP based customer endpoint devices via a customer LAN, e.g., 140 with a VoIP gateway and router 142. A packet based access network 130 or 131, such as DSL or Cable, when used together with a TA 132 or 133, is used to support TDM based customer endpoint devices.

The core VoIP infrastructure comprises of several key VoIP components, such the Border Element (BE) 112 and 113, the Call Control Element (CCE) 111, and VoIP related servers 114. The BE resides at the edge of the VoIP core infrastructure and interfaces with customers endpoints over various types of access networks. A BE is typically implemented as a Media Gateway and performs signaling, media control, security, and call admission control and related functions. The CCE resides within the VoIP infrastructure and is connected to the BEs using the Session Initiation Protocol (SIP) over the underlying IP/MPLS based core backbone network 110. The CCE is typically implemented as a Media Gateway Controller or a softswitch and performs network wide call control related functions as well as interacts with the appropriate VoIP service related servers when necessary. The CCE functions as a SIP back-to-back user agent and is a signaling endpoint for all call legs between all BEs and the CCE. The CCE may need to interact with various VoIP related servers in order to complete a call that require certain service specific features, e.g. translation of an E.164 voice network address into an IP address.

For calls that originate or terminate in a different carrier, they can be handled through the PSTN 120 and 121 or the Partner IP Carrier 160 interconnections. For originating or terminating TDM calls, they can be handled via existing PSTN interconnections to the other carrier. For originating or terminating VoIP calls, they can be handled via the Partner IP carrier interface 160 to the other carrier.

In order to illustrate how the different components operate to support a VoIP call, the following call scenario is used to illustrate how a VoIP call is setup between two customer endpoints. A customer using IP device 144 at location A places a call to another customer at location Z using TDM device 135. During the call setup, a setup signaling message is sent from IP device 144, through the LAN 140, the VoIP Gateway/Router 142, and the associated packet based access network, to BE 112. BE 112 will then send a setup signaling message, such as a SIP-INVITE message if SIP is used, to CCE 111. CCE 111 looks at the called party information and queries the necessary VoIP service related server 114 to obtain the information to complete this call. If BE 113 needs to be involved in completing the call; CCE 111 sends another call setup message, such as a SIP-INVITE message if SIP is used, to BE 113. Upon receiving the call setup message, BE 113 forwards the call setup message, via broadband network 131, to TA 133. TA 133 then identifies the appropriate TDM device 135 and rings that device. Once the call is accepted at location Z by the called party, a call acknowledgement signaling message, such as a SIP-ACK message if SIP is used, is sent in the reverse direction back to the CCE 111. After the CCE 111 receives the call acknowledgement message, it will then send a call acknowledgement signaling message, such as a SIP-ACK message if SIP is used, toward the calling party. In addition, the CCE 111 also provides the necessary information of the call to both BE 112 and BE 113 so that the call data exchange can proceed directly between BE 112 and BE 113. The call signaling path 150 and the call media path 151 are illustratively shown in FIG. 1. Note that the call signaling path and the call media path are different because once a call has been setup up between two endpoints, the CCE 111 does not need to be in the data path for actual direct data exchange.

Media Servers (MS) 115 are special servers that typically handle and terminate media streams, and to provide services such as announcements, bridges, transcoding, and Interactive Voice Response (IVR) messages for VoIP service applications.

Note that a customer in location A using any endpoint device type with its associated access network type can communicate with another customer in location Z using any endpoint device type with its associated network type as well. For instance, a customer at location A using IP customer endpoint device 144 with packet based access network 140 can call another customer at location Z using TDM endpoint device 123 with PSTN access network 121. The BEs 112 and 113 are responsible for the necessary signaling protocol translation, e.g., SS7 to and from SIP, and media format conversion, such as TDM voice format to and from IP based packet voice format.

Enterprise VoIP customers often want to reap the economic benefits of using shared access facilities but desire the higher quality of service benefits rendered from dedicated communication paths. In shared access facilities, all customers compete for the same available pool of bandwidth and there is typically no quality of service assurance in the form of a Service Level Agreement (SLA). An SLA is a set of performance objectives reached by consensus between the user and the provider of network services that specifies a variety of network service performance guarantees. When traffic volume is high, quality of service experienced by customers of shared access facilities will also degrade. On the other hand, the use of dedicated access facilities results in high, sometimes prohibitive, costs. Enterprise customers often want to obtain some degree of service level guarantee but do not want to pay for the high costs of dedicated access facilities.

To address this need, the present invention enables an overlay structure in the access portion of a packet network, e.g., a VoIP network, that allows enterprise customers to place their traffic on virtual private links for both signaling and media traffic. In one embodiment, the present invention partitions the VoIP access network components so that only subscribers of private access lines can use the virtual private traffic links across the infrastructure. These private links provide the highest quality of service backed by SLA and prioritize the traffic of subscribers of private access lines over any other traffic that is being transmitted.

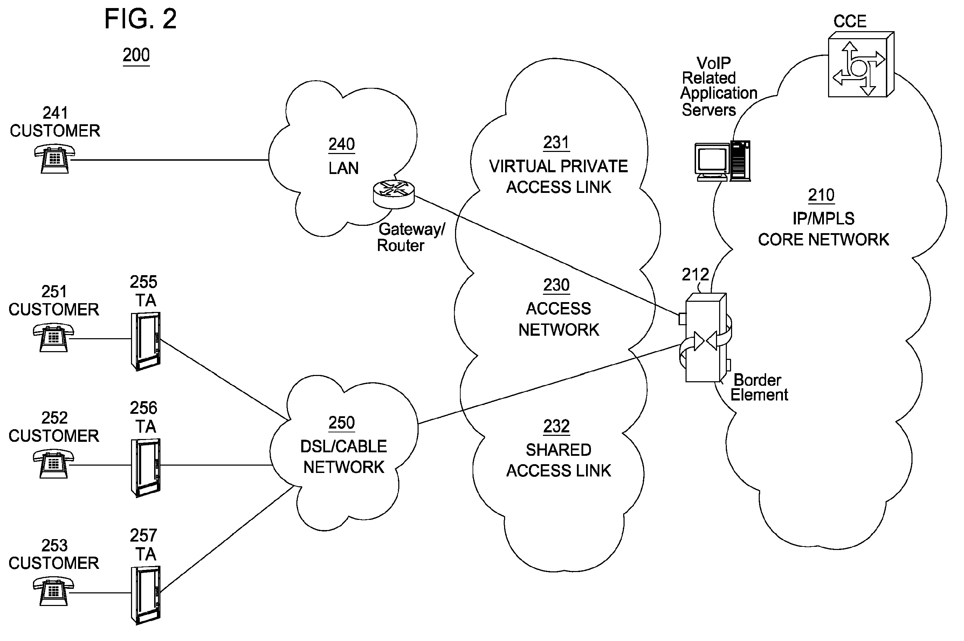

FIG. 2 illustrates an exemplary architecture 200 for enabling virtual private access links in a packet network, e.g., a VoIP network, related to the present invention. It should be noted that the term "virtual private access link" is defined to be an access link that traverse a particular portion of an access network over which resource, such as reserved bandwidth and optimal routing, are engineered in that portion of the access network to support a set of one or more virtual private access link subscribers. In other words, an access network provider sets aside a subset of its network resources specifically to provide high quality of service access arrangement to subscribers of the virtual private access link service feature. A virtual private access link typically guarantees a certain level of quality of service via an SLA between a service provider and a subscriber.

In FIG. 2, shared access link 232 of the access network 230 is shared by a number of subscribers, or customers 251, 252, and 253. These customers compete for the same pool of available bandwidth to be connected to the edge component, BE 212, of the VoIP network 210 via TAs 255-257, and broadband access network 250. Typically, there is no SLA guarantee for customers 251, 252, 253 in a shared access link environment. When traffic volume is high, shared access link 232 may become congested and the quality of service experienced by customers 251, 252, and 253 will suffer. For instance, more packets may be dropped or delay may be high when compared to normal operating conditions.

Customer 241 subscribes to the virtual private access link service feature and is connected to the edge component, BE 212, of the VoIP network 210 via network 240 using virtual private access link 231 of the access network 230. Customer 241 and the VoIP network provider have an SLA in place and the performance of virtual private access link 231 is guaranteed as specified in the SLA. The virtual private access link 231 can utilize or can be implemented in accordance with a Virtual Private Network (VPN) protocol comprising a Frame Relay (FR) protocol, an Asynchronous Transfer Mode (ATM) protocol, or an Internet Protocol (IP) VPN protocol.

Virtual private access link 231 can be routed over a specific route that is route diverse with reserved bandwidth that is independent of any shared access links. If the virtual private access link 231 cannot be routed over a diverse route with reserved bandwidth that is independent of any shared access links, then virtual private access link 231 can be routed over the a shared access link except that the traffic from the virtual private access link is given higher queuing and processing priority over traffic from the shared access link. Sometimes, a diverse route with reserved bandwidth that is independent of any shared access links may not always be possible due to network engineering, implementation, or resource limitations.

In general, in order to support a higher level of quality of service for virtual private access link subscribers, the virtual private access link 231 will first be routed over resources, such as a diverse route with reserved bandwidth, within an access network that are independent of any shared access links wherever possible. In the case that the virtual private access link 231 cannot be routed over resources that are independent of other shared access links, then virtual private access link 231 will be routed over resources being shared with other shared access links except that the traffic from the virtual private access link 231 will be given higher queuing and processing priority that the traffic shared access links.

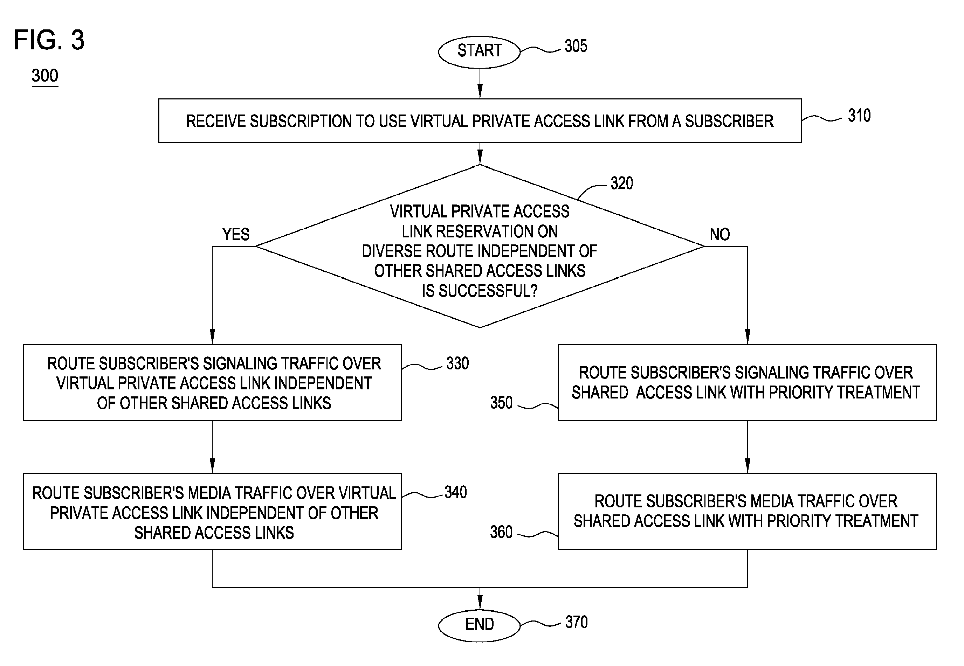

FIG. 3 illustrates a flowchart of a method 300 for enabling virtual private access links in a packet network, e.g., a VoIP network, of the present invention. Method 300 starts in step 305 and proceeds to step 310.

In step 310, the method receives a subscription request from a customer to subscribe to the virtual private access link service feature. In one embodiment, the customer may subscribe via a web-based interface, e.g., a web site operated by the service provider.

In step 320, the method checks if the reservation of a virtual private access link with both route and bandwidth diversity is successful. If the virtual private access link is successfully reserved with route and bandwidth diversity, the method proceeds to step 330; otherwise, the method proceeds to step 350.

In step 330, the method routes the private signaling traffic (e.g., signaling messages such call setup messages and the like) from the subscriber over the virtual private access link with route and bandwidth diversity. Namely, an independent access link is used to route the signaling traffic where non-private, or shared, access link traffic will not be allowed on this independent access link.

In step 340, the method routes the private media traffic (e.g., the actual media signals such as a voice signal and the like) from the subscriber over the virtual private access link with route and bandwidth diversity. Namely, an independent access link is used to route the media traffic where non-private, or shared, access link traffic will not be allowed on this independent access link.

In step 350, the method routes the private signaling traffic from the subscriber over the virtual private access link using a shared access facility that gives the private signaling traffic higher queuing and processing priority in the shared access link. Namely, a shared access link is used but the signaling traffic from the private access link subscribers will be treated as having higher priority over non-private, or shared, access link subscribers.

In step 360, the method routes the private media traffic from the subscriber over the virtual private access link over a shared access facility that gives the private media traffic higher queuing and processing priority in the shared access link. Namely, a shared access link is used but the media traffic from the private access link subscribers will be treated as having higher priority over non-private, or shared, access link subscribers. The method ends in step 370.

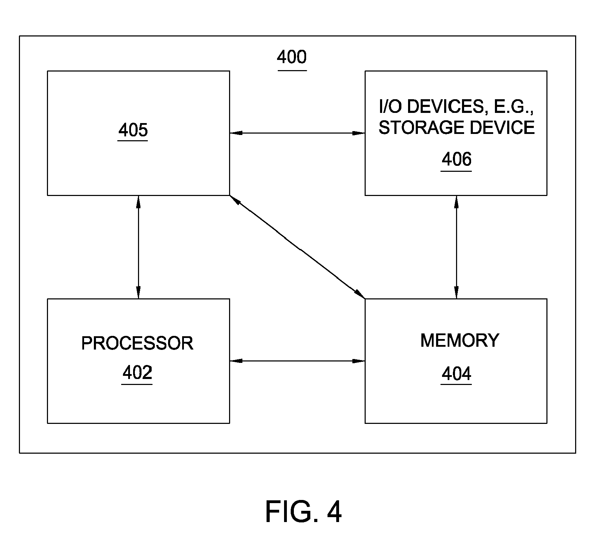

FIG. 4 depicts a high level block diagram of a general purpose computer suitable for use in performing the functions described herein. As depicted in FIG. 4, the system 400 comprises a processor element 402 (e.g., a CPU), a memory 404, e.g., random access memory (RAM) and/or read only memory (ROM), a module 405 for providing virtual private access links, and various input/output devices 406 (e.g., storage devices, including but not limited to, a tape drive, a floppy drive, a hard disk drive or a compact disk drive, a receiver, a transmitter, a speaker, a display, a speech synthesizer, an output port, and a user input device (such as a keyboard, a keypad, a mouse, and the like)).

It should be noted that the present invention can be implemented in software and/or in a combination of software and hardware, e.g., using application specific integrated circuits (ASIC), a general purpose computer or any other hardware equivalents. In one embodiment, the present virtual private access links module or process 405 can be loaded into memory 404 and executed by processor 402 to implement the functions as discussed above. As such, the present virtual private access links process 405 (including associated data structures) of the present invention can be stored on a computer readable medium or carrier, e.g., RAM memory, magnetic or optical drive or diskette and the like.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

## Claims

1. A method for providing at least one virtual private access link in a communication network, comprising:
receiving a request from a customer to subscribe to said at least one virtual private access link in the communication network;
routing signaling traffic and media traffic of said customer on said at least one virtual private access link; and
wherein said at least one virtual private access link is deployed over a diverse route having a reserved bandwidth and is independent of any shared access links, and if said diverse route is not available, then said at least one virtual private access link is deployed over a shared access link, where said signaling traffic and media traffic from said virtual private access link are processed with a higher priority.

2. The method of claim 1, wherein said communication network is a Voice over Internet Protocol, VoIP, network or a Service over Internet Protocol, SoIP, network.

3. The method of claim 1 or 2, wherein said virtual private access link can be implemented in accordance with a Virtual Private Network, VPN, protocol comprising a Frame Relay, FR, protocol, an Asynchronous Transfer Mode, ATM, protocol, or an Internet Protocol, IP, VPN protocol.

4. The method of claim 3, wherein a quality of service of said at least one virtual private access link is guaranteed by a Service Level Agreement, SLA.

5. The method of any one of the preceding claims, wherein said signaling traffic and media traffic from said virtual private access link are processed with said higher priority over traffic of shared access link customers.

6. The method of any one of the preceding claims, wherein said request from said customer is received over a web-based interface.

7. The method of any one claims 1 to 4, wherein said signaling traffic and media traffic from said virtual private access link are given higher queuing and processing priority.

8. A computer-readable medium having stored thereon a plurality of instructions, the plurality of instructions including instructions which, when executed by a processor, cause the processor to perform the steps of the method of any one of the preceding claims.

9. An apparatus for providing at least one virtual private access link in a communication network, comprising:
means for receiving a request from a customer to subscribe to said at least one virtual private access link in the communication network;
means for routing signaling traffic and media traffic of said customer on said at least one virtual private access link; and
wherein said at least one virtual private access link is deployed over a diverse route having a reserved bandwidth and is independent of any shared access links, and if said diverse route is not available, then said at least one virtual private access link is deployed over a shared access link, where said signaling traffic and media traffic from said virtual private access link are processed with a higher priority.

10. The apparatus of claim 9, wherein said communication network is a Voice over Internet Protocol, VoIP, network or a Service over Internet Protocol, SoIP, network.

11. The apparatus of claim 9 or 10, wherein said virtual private access link can be implemented in accordance with a Virtual Private Network, VPN, protocol comprising a Frame Relay, FR, protocol, an Asynchronous Transfer Mode, ATM, protocol, or an Internet Protocol, IP, VPN protocol.

12. The apparatus of claim 11, wherein a quality of service of said at least one virtual private access link is guaranteed by a Service Level Agreement, SLA.

13. The apparatus of claim 11 or 12, wherein said signaling traffic and media traffic from said virtual private access link are processed with said higher priority over traffic of shared access link customers.

14. The apparatus of any one of claims 9 to 12, wherein said signaling traffic and media traffic from said virtual private access link are given higher queuing and processing priority.
